# EUROPEAN PATENT APPLICATION

(11) **EP 3 711 823 A1**
(43) Date of publication of application: **23.09.2020**
(21) Application number: 17932312.6
(22) Date of filing: 18.12.2017
(51) Int. Cl.: A62C 37/40, A62C 37/36, H04N 7/18, H04N 5/232, G08B 17/00, G08B 13/196, G08B 19/00

(54) **REMOTE FIRE EXTINGUISHING EQUIPMENT AND REMOTE CRIME PREVENTION AND EXTERMINATION EQUIPMENT**

(30) Priority: 15.11.2017 KR 20170152318
(71) Applicant: Shin, Sung Jae, Goyang-si, Gyeonggi-do 10506 (KR); Shin, Yeong Jae, Goyang-si, Gyeonggi-do 10374 (KR); Shin, Min Jae, Goyang-si, Gyeonggi-do 10501 (KR); Shin, Yun Jae, Goyang-si, Gyeonggi-do 10506 (KR); Shin, Yong Mu, Goyang-si, Gyeonggi-do 10513 (KR)
(72) Inventor: Shin, Sung Jae, Goyang-si, Gyeonggi-do 10506 (KR); Shin, Yeong Jae, Goyang-si, Gyeonggi-do 10374 (KR); Shin, Min Jae, Goyang-si, Gyeonggi-do 10501 (KR); Shin, Yun Jae, Goyang-si, Gyeonggi-do 10506 (KR); Shin, Yong Mu, Goyang-si, Gyeonggi-do 10513 (KR)
(74) Representative: Beetz & Partner mbB
(86) International application number: PCT/KR2017/014941
(87) International publication number: WO 2019/098451

(57) **Abstract**

According to various embodiments of the present invention relate to a remote fire extinguishing system and a remote security system, comprising: a flame sensor detecting a flame when a fire occurs and transmitting a flame sensing signal through a communication network; a smartphone transmitting a capturing signal for an area where the fire occurs through the communication network when receiving the flame sensing signal through the communication network; an IP camera unit capturing the fire area when receiving the capturing signal from the smartphone, and transmitting a captured image through the communication network to the smartphone; and a smart plug jetting a fire extinguishing liquid to the fire area when receiving a user control signal from the smartphone through the communication network.

## Description

### [Technical Field]

Various embodiments of the present invention relate to a remote fire extinguishing system and a remote security system.

### [Background Art]

Recently frequent are occasions where a building fire leads to a massacre. This is why in large buildings it is not easy to quickly notice a fire and a number of people simultaneously move along many fire escapes. After a few fire massacres, an effort is being made to set and distribute safety regulations and train people while placing various fire extinguishing equipment in newly constructed buildings.

However, most of buildings are merely equipped with fire sensors and sprinklers and are still vulnerable to fire.

Conventional fire extinguishing equipment cannot immediately extinguish a fire.

Thus, there is a growing need for a system which enables integrated management of a simplified structure equipped in an existing or new building. Also further required is technology capable of efficiently extinguishing a fire while preventing the spread of fire.

Meanwhile, conventional security equipment cannot take an immediate action to any invader but what they can do is simply alerting or warning, which causes it difficult for safety guard to come up to the scene as quick as possible.

The description disclosed in the Background section is only for a better understanding of the background of the invention and may also include information which does not constitute the prior art.

### [Detailed Description of the Invention]

### [Technical Problem]

According to various embodiments, the present invention aims to provide a remote fire extinguishing system and remote security system.

As an example, according to various embodiments of the present invention, there is provided a remote fire extinguishing system in which when a fire occurs, the circumstances and location of the fire scene and information about the fire scene are provided to a smartphone via a flame sensor and a communication network, e.g., a wireless network (WCDMA) or a wired network (PSTN) and, if the monitor is then rendered to interoperate via an IP camera, the monitor is identified and a smart plug is executed, and the fire may be put out at an early stage even from a remote site through an IP camera app.

As another example, according to various embodiments of the present invention, there is provided a remote security system in which when there is a trespasser to a home or company, the circumstances and location of the trespass scene and information about the trespass scene are provided to a smartphone via a flame sensor and a communication network, e.g., a wireless network (WCDMA) or a wired network (PSTN) and, if the monitor is then rendered to interoperate via an IP camera, the monitor is identified and a smart plug is executed, and the trespasser may be physically expelled even from a remote site through an IP camera app.

### [Technical Solution]

According to various embodiments of the present invention, a remote fire extinguishing system may comprise a flame sensor detecting a flame when a fire occurs and transmitting a flame sensing signal through a communication network, a smartphone transmitting a capturing signal for an area where the fire occurs through the communication network when receiving the flame sensing signal through the communication network, an IP camera unit capturing the fire area when receiving the capturing signal from the smartphone, and transmitting a captured image through the communication network to the smartphone, and a smart plug jetting a fire extinguishing liquid to the fire area when receiving a user control signal from the smartphone through the communication network.

The IP camera unit may include an IP camera capturing the fire area and a pan tilt unit having the IP camera mounted thereon and moving the IP camera in an upper, lower, left, or right direction by the user control signal from the smartphone.

The smart plug may include a pressurizing pump pressurizing water and an electronic valve jetting water from the pressurizing pump. A jetting nozzle may be connected to the electronic valve, and the jetting nozzle may be mounted on the IP camera.

The smart plug may include a fire extinguishing liquid tank and an electronic valve jetting a fire extinguishing liquid from the fire extinguishing liquid tank. A jetting nozzle may be connected to the electronic valve, and the jetting nozzle may be mounted on the IP camera.

The IP camera and the jetting nozzle may be together moved in an upper, lower, left, or right direction by the user control signal from the smartphone.

According to various embodiments of the present invention, a remote security system may comprise a trespass sensor detecting a trespass when the trespass occurs and transmitting a trespass sensing signal through a communication network, a smartphone transmitting a capturing signal for an area where the trespass occurs through the communication network when receiving the trespass sensing signal through the communication network, an IP camera unit capturing the trespassing area when receiving the capturing signal from the smartphone, and transmitting a captured image through the communication network to the smartphone, and a smart plug jetting a fire extinguishing liquid to the trespassing area when receiving a user control signal from the smartphone through the communication network.

The IP camera unit may include an IP camera capturing the trespassing area and a pan tilt unit having the IP camera mounted thereon and moving the IP camera in an upper, lower, left, or right direction by the user control signal from the smartphone.

The smart plug may include a pressurizing pump pressurizing water and an electronic valve jetting water from the pressurizing pump. A jetting nozzle may be connected to the electronic valve, and the jetting nozzle may be mounted on the IP camera.

The smart plug may include a fire extinguishing liquid tank and an electronic valve jetting a fire extinguishing liquid from the fire extinguishing liquid tank. A jetting nozzle may be connected to the electronic valve, and the jetting nozzle may be mounted on the IP camera.

The IP camera and the jetting nozzle may be together moved in an upper, lower, left, or right direction by the user control signal from the smartphone.

### [Advantageous Effects]

According to various embodiments of the present invention, there are provided a remote fire extinguishing system and a remote security system.

As an example, according to various embodiments of the present invention, there is provided a remote fire extinguishing system in which when a fire occurs, the circumstances and location of the fire scene and information about the fire scene are provided to a smartphone via a flame sensor and a communication network, e.g., a wireless network (WCDMA) or a wired network (PSTN) and, if the monitor is then rendered to interoperate via an IP camera, the monitor is identified and a smart plug is executed, and the fire may be put out at an early stage even from a remote site through an IP camera app.

As another example, according to various embodiments of the present invention, there is provided a remote security system in which when there is a trespasser to a home or company, the circumstances and location of the trespass scene and information about the trespass scene are provided to a smartphone via a flame sensor and a communication network, e.g., a wireless network (WCDMA) or a wired network (PSTN) and, if the monitor is then rendered to interoperate via an IP camera, the monitor is identified and a smart plug is executed, and the trespasser may be physically expelled even from a remote site through an IP camera app.

### [Brief Description of Drawings]

Fig. 1 is a block diagram illustrating a configuration of a remote fire extinguishing system according to various embodiments of the present invention;
Fig. 2 is a block diagram illustrating a configuration of a remote fire extinguishing system according to various embodiments of the present invention;
Fig. 3 is a block diagram illustrating a configuration of a remote fire extinguishing system according to various embodiments of the present invention;
Figs. 4 and 5 are views schematically illustrating an example remote fire extinguishing system and an example of installation according to various embodiments of the present invention;
Figs. 6, 7, and 8 are views schematically illustrating the state of adjusting and jetting of a remote fire extinguishing system according to various embodiments of the present invention;
Fig. 9 is a block diagram illustrating a configuration of a remote security system according to various embodiments of the present invention;
Fig. 10 is a block diagram illustrating a configuration of a remote security system according to various embodiments of the present invention;
Fig. 11 is a block diagram illustrating a configuration of a remote security system according to various embodiments of the present invention; and
Fig. 12 is a view schematically illustrating the state of adjusting and jetting of a remote security system according to various embodiments of the present invention.

### [Mode for Carrying out the Invention]

Hereinafter, embodiments of the present invention are described in detail with reference to the accompanying drawings.

Embodiments of the disclosure are provided to thoroughly explain the disclosure to those skilled in the art, and various modifications may be made thereto, and the scope of the present invention is not limited thereto. Embodiments of the disclosure are provided to fully and thoroughly convey the spirit of the present invention to those skilled in the art.

As used herein, the thickness and size of each layer may be exaggerated for ease or clarity of description. The same reference denotations may be used to refer to the same or substantially the same elements throughout the specification and the drawings. As used herein, the term "A and/or B" encompasses any, or one or more combinations, of A and B. It will be understood that when an element or layer is referred to as being "on," "connected to," "coupled to," or "adjacent to" another element or layer, it can be directly on, connected, coupled, or adjacent to the other element or layer, or intervening elements or layers may be present.

The terms as used herein are provided merely to describe some embodiments thereof, but not intended as limiting the present invention. As used herein, the singular forms "a," "an," and "the" are intended to include the plural forms as well, unless the context clearly indicates otherwise. As used herein, the term "comprise," "include," and/or "comprising" or "including" does not exclude the presence or addition of one or more other components, steps, operations, and/or elements than the component, step, operation, and/or element already mentioned.

As used herein, the terms "first" and "second" may be used to describe various members, parts, regions, areas, layers, and/or portions, but the members, parts, regions, areas, layers, and/or portions are not limited thereby. These terms are used merely to distinguish one member, part, region, area, layer, or portion from another. Accordingly, the term "first member," "first part," "first region," "first area," "first layer," or "first portion" described herein may denote a "second member," "second part," "second region," "second area," "second layer," or "second portion" without departing from the teachings disclosed herein.

The terms "beneath," "below," "lower," "under," "above," "upper," "on," or other terms to indicate a position or location may be used for a better understanding of the relation between an element or feature and another as shown in the drawings. However, embodiments of the present invention are not limited thereby or thereto. For example, where a lower element or an element positioned under another element is overturned, then the element may be termed as an upper element or element positioned above the other element. Thus, the term "under" or "beneath" may encompass, in meaning, the term "above" or "over."

As described herein, the controller and/or other related devices or parts may be implemented in hardware, firmware, application specific integrated circuits (ASICs), software, or a combination thereof. For example, the controller and/or other related devices or parts or its or their components may be implemented in a single integrated circuit (IC) chip or individually in multiple IC chips. Further, various components of the controller may be implemented on a flexible printed circuit board, in a tape carrier package, on a printed circuit board, or on the same substrate as the controller. Further, various components of the controller may be processes, threads, operations, instructions, or commands executed on one or more processors in one or more computing devices, which may execute computer programming instructions or commands to perform various functions described herein and interwork with other components. The computer programming instructions or commands may be stored in a memory to be executable on a computing device using a standard memory device, e.g., a random access memory (RAM). The computer programming instructions or commands may be stored in, e.g., a compact-disc read only memory (CD-ROM), flash drive, or other non-transitory computer readable media. It will be appreciated by one of ordinary skill in the art that various functions of the computing device may be combined together or into a single computing device or particular functions of a computing device may be distributed to one or other computing devices without departing from the scope of the present invention.

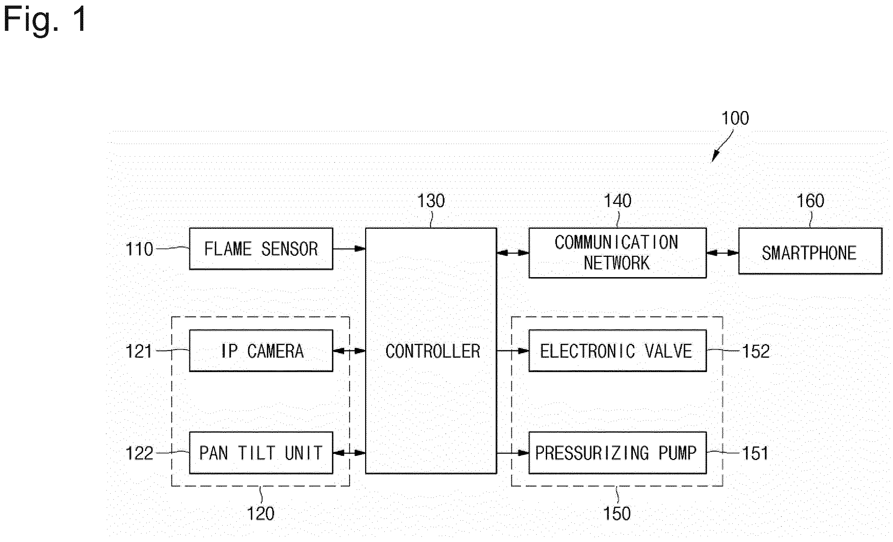

Fig. 1 is a block diagram illustrating a configuration of a remote fire extinguishing system 100 according to various embodiments of the present invention.

Referring to Fig. 1, according to various embodiments of the present invention, a remote fire extinguishing system 100 may include a flame sensor 110, an IP camera unit 120, a controller 130, a communication network 140, a smart plug 150, and a smart phone 160.

The flame sensor 110 may be installed in a home, company, factory, or skyscraper to detect fire flame or smoke and transmit a flame/smoke sensing signal to the controller 130. The controller 130 transmits the flame/smoke sensing signal to the smartphone 160 via the communication network 140.

When receiving a capturing request signal from the smartphone 160, the IP camera unit 120 may capture the area where a fire occurs and transmit the captured fire image to the controller 130. The controller 130 transmits the captured fire image to the smartphone 160 via the communication network 140.

The IP camera unit 120 may include an IP camera 121 and a pan tilt unit 122. The IP camera 121 may capture the area of a fire and transmit the captured image to the smartphone 160. The pan tilt unit 122 may move the IP camera 121 up, down, to the left, or to the right by a user control signal from the smartphone 160 to allow the user to observe the area where the fire occurs through the smartphone 160. Substantially, the IP camera 121 may be mounted above or under the pan tilt unit 122. The flame sensor 110 may be integrally formed with the IP camera 121.

As described above, the controller 130 transmits a fame sensing signal from the flame sensor 110 via the communication network 140 to the smartphone 160, transmits a fire image captured by the IP camera 121 of the IP camera unit 120 through the communication network 140 to the smartphone 160, and receives a user control signal from the smartphone 160 through the communication network 140 to move the pan tilt unit 122 of the IP camera unit 120 to move up, down, to the left, or to the right, thereby allowing the user to more precisely search for the image of the fire through the IP camera 121.

The communication network 140 may include a wireless (WCDMA) network, a wired (PSTN) network, a Wi-Fi network, a Zigbee network, a 2G network, a 3G network, a 4G network, or a 5G network and enables communication between the flame sensor 110, the IP camera unit 120, the smart plug 150, and/or the smartphone 160.

When receiving a user control signal from the smartphone 160 via the communication network 140 and the controller 130, the smart plug 150 may directly jet a fire extinguishing material (e.g., water) to the fire area.

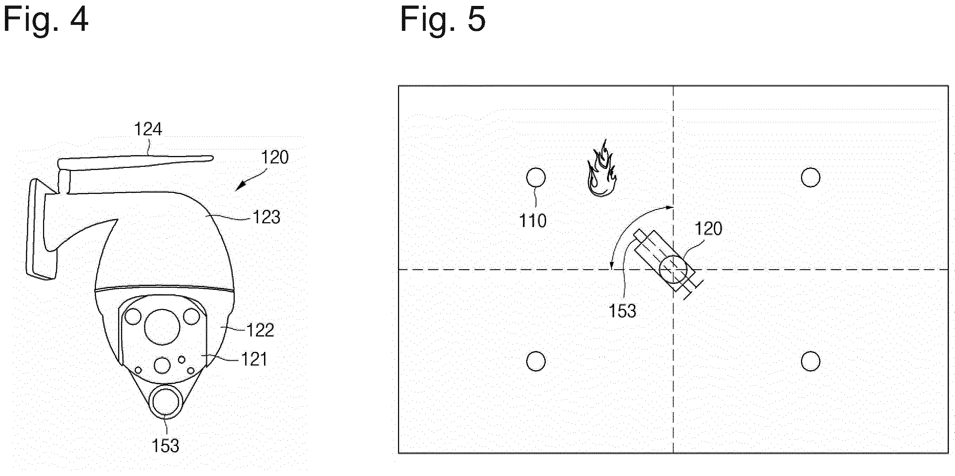

To that end, the smart plug 150 may include a pressurizing pump 151, an electronic valve 152, and a jetting nozzle 153 (refer to Fig. 5). The pressurizing pump 151 may pressurize and supply water by a control signal from the smartphone 160. The electronic valve 152 may open (or close) a flow path to allow water to be jetted from the pressurizing pump 151. The jetting nozzle 153 is connected to the electronic valve 152 to allow water to be actually jetted to the fire area. Here, the electronic valve 152 may be, e.g., a typical solenoid valve, an air pressure valve, or a hydraulic valve, but is not limited thereto. The jetting nozzle 153 is mounted on the IP camera 121 to allow water to be jetted to the fire area which the IP camera 121 is oriented. The components may be shared in all the embodiments of the present invention. In the case of jetting a liquid, a water electronic valve may be desirable, and in the case of a fire extinguishing liquid, a hydraulic electronic valve may be desirable, but the present invention is not limited thereto.

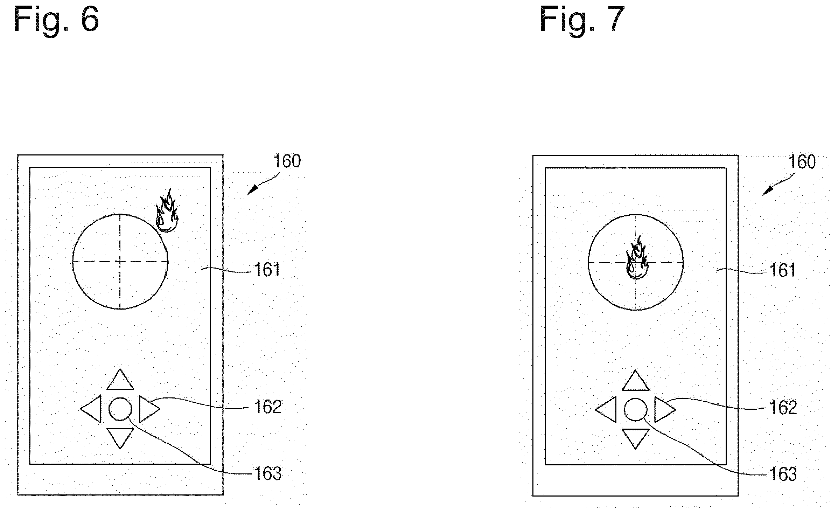

That is, if the user adjusts the position of the IP camera unit 120 to face the fire area while viewing the monitor 161 (refer to Fig. 6) of the smartphone 160 and transmits a water jet control signal, the electronic valve 152 of the smart plug 150 may be opened to allow the jetting nozzle 153 to directly and in real-time jet water to the area where a fire actually occurs. In other words, if the user adjusts the direction in which the IP camera unit 120 faces through an app of the smartphone 160, the direction in which the jetting nozzle 153 faces may also be adjusted to allow the user to easily and directly jet water to the fire scene. Further, the strength of the pressurizing pump 151 may be adjusted through the smartphone 160 so that the distance at which water is jetted may be adjusted. Further, the opening angle of the electronic valve 152 may be adjusted through the smartphone 160, thereby allowing the amount of water jetted to be adjusted. Thus, the user may jet water in a distance and amount optimized for the fire area. Such a simple configuration may also be possible that if the user transmits a water jet control signal, the smart plug 150 is turned on/off (i.e., the electronic valve 152 is fully open or fully closed) to allow water to be jetted in a predetermined distance and amount. Such operations may be shared in all the embodiments of the present invention.

The smartphone 160 may include a particular app for various operations described above. That is, an app programmed to enable the above-described operations may be installed on the smartphone 160. The app of the smartphone 160 receives a flame sensing signal from the flame sensor 110 via the communication network 140 as set forth above and notifies the user of the same via an alarm signal. The alarm signal may be a visual signal or audible signal.

Then, if the user notices the fire situation and inputs an operation signal or capturing request signal for the IP camera unit 120 through the smartphone 160, the IP camera unit 120 transmits an image for the fire scene via the communication network 140 to the smartphone 160.

Then, the user may search for the fire image via the monitor 161 of the smartphone 160. As the user adjusts a position changing button 162 (refer to Fig. 6) of the smartphone 160, the position of the IP camera unit 120 may be varied, thus allowing the position of the IP camera unit 120 and the smart plug 150 with respect to the jetting nozzle 153 to be adjusted. In particular, the user may adjust the position via the smartphone 160 to allow the IP camera unit 120 and the jetting nozzle 153 to precisely face the fire area.

In such a state, if the user presses a jet button 163 (refer to Fig. 6) of the smartphone 160, water may directly be jetted to the fire area through the jetting nozzle 153 of the smart plug 150, thereby putting out the fire.

By so doing, the remote fire extinguishing system 100 according to an embodiment may allow the circumstance and location of the fire scene and information about the fire scene to be provided or known to the smartphone 160 via the flame sensor 110 and the communication network 140, e.g., a wireless network (WCDMA) or wired network (PSTN) when a fire occurs and, if the monitor 161 of the smartphone 160 is then rendered to interoperate via the IP camera unit 120, identify the monitor 161 and then execute the smart plug 150, and allow the fire to be put out with water at an early stage even from a remote site via an IP camera app.

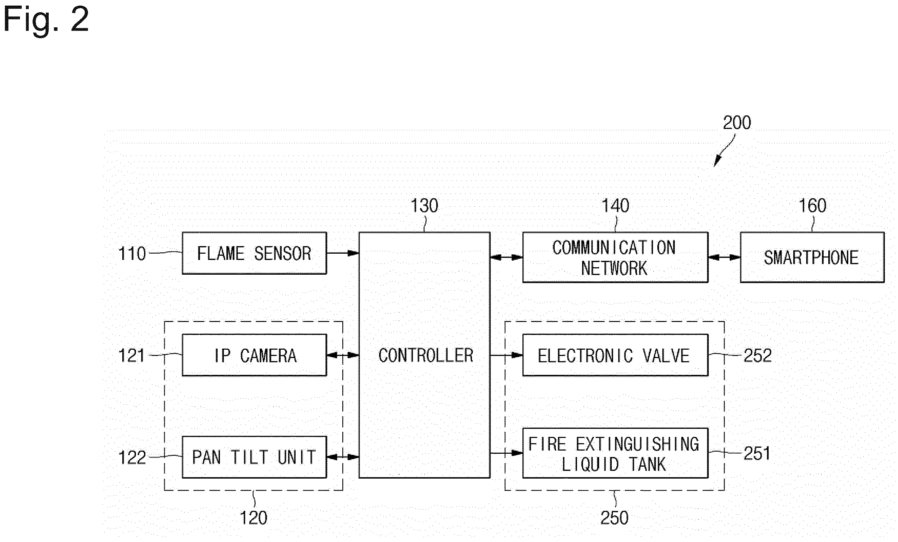

Fig. 2 is a block diagram illustrating a configuration of a remote fire extinguishing system 200 according to various embodiments of the present invention.

The configuration of the remote fire extinguishing system 200 shown in Fig. 2 is similar to the configuration of the remote fire extinguishing system 100 shown in Fig. 1. Thus, the description focuses primarily on the differences.

Referring to Fig. 2, according to an embodiment of the present invention, the remote fire extinguishing system 200 includes a smart plug 250 which differs from the above-described smart plug 150.

When receiving a user control signal from the smartphone 160 via the communication network 140 and the controller 130, the smart plug 250 may directly jet a fire extinguishing material (e.g., fire extinguishing liquid) to the fire area. To that end, the smart plug 250 may include a fire extinguishing liquid tank 251, an electronic valve 252, and a jetting nozzle. The fire extinguishing liquid tank 251 stores a compressed fire extinguishing liquid for use in the scene of a fire which is related to oil, chemical solutions, metal, or electricity and may not be extinguished with water. The electronic valve 252 may open (or close) the flow path to allow the fire extinguishing liquid from the fire extinguishing liquid tank 251 to be jetted. The jetting nozzle is connected to the electronic valve 252 to allow the fire extinguishing liquid to actually be jetted to the fire scene. Here, the electronic valve 252 may be, e.g., a typical solenoid valve, an air pressure valve, or a hydraulic valve, but is not limited thereto. The jetting nozzle 253 is mounted on the IP camera 121 to allow the fire extinguishing liquid to be jetted to the fire area which the IP camera 121 is oriented. That is, if the user allows the IP camera unit 120 to face the fire area while viewing the monitor 161 of the smartphone 160 and transmits a fire extinguishing liquid jet control signal, the electronic valve 252 of the smart plug 250 may be opened to allow the jetting nozzle to directly and in real-time jet the fire extinguishing liquid to the area where a fire actually occurs. In other words, if the user adjusts the direction in which the IP camera unit 120 faces through an app of the smartphone 160, the direction in which the jetting nozzle faces may also be adjusted to allow the user to easily and directly jet the fire extinguishing liquid to the fire scene. Further, the opening angle of the electronic valve 252 may be adjusted through the smartphone 160 to allow the amount of fire extinguishing liquid jetted to be adjusted, so that the user may jet an optimized amount of fire extinguishing liquid to the fire area. Such a simple configuration may also be possible that if the user transmits a fire extinguishing liquid jet control signal, the smart plug 250 is turned on/off (i.e., the electronic valve 252 is fully open or fully closed) to allow the fire extinguishing liquid to be jetted in a predetermined distance and amount.

By so doing, the remote fire extinguishing system 200 according to an embodiment may allow the circumstance and location of the fire scene and information about the fire scene to be provided or known to the smartphone 160 via the flame sensor 110 and the communication network 140, e.g., a wireless network (WCDMA) or wired network (PSTN) when a fire occurs and, if the monitor 161 of the smartphone 160 is then rendered to interoperate via the IP camera unit 120, identify the monitor 161 and then execute the smart plug 150, and allow the fire to be put out with a fire extinguishing liquid at an early stage even from a remote site via an IP camera app.

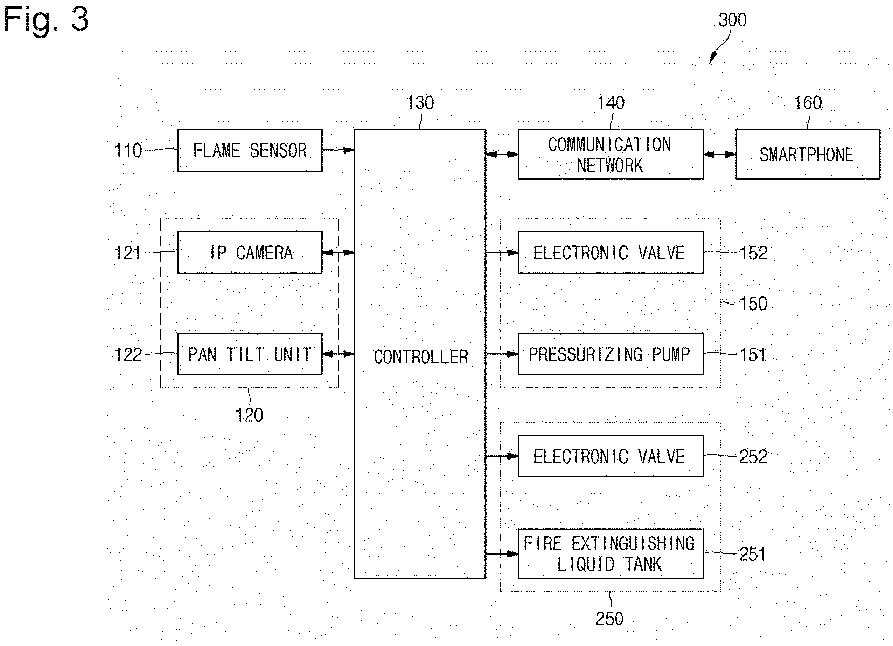

Fig. 3 is a block diagram illustrating a configuration of a remote fire extinguishing system 300 according to various embodiments of the present invention.

The configuration of the remote fire extinguishing system 300 shown in Fig. 3 is similar to the configuration of the remote fire extinguishing systems 100 and 200 shown in Figs. 1 and 2.

In other words, as shown in Fig. 3, according to an embodiment of the present invention, the remote fire extinguishing system 300 may include a smart plug 150 to allow water to be jetted to the fire area and a smart plug 250 to allow a fire extinguishing liquid to be jetted to the fire area so that the kind of a fire extinguishing liquid may be selected depending on the kind of fire.

Thus, the user may selectively control the smart plug 150, which may jet water, and the smart plug 250, which may jet a fire extinguishing liquid, depending on the type of fire.

Figs. 4 and 5 are views schematically illustrating an example remote fire extinguishing system 100, 200, or 300 and an example of installation according to various embodiments of the present invention.

Referring to Fig. 4, an IP camera unit 120 of a remote fire extinguishing system 100, 200, or 300 may include an IP camera 121, a pan tilt unit 122 on which the IP camera 121 is mounted, and a fixing part 123 to fix the pan tilt unit to a wall or ceiling. Here, the IP camera 121 may have a flame sensor 110 integrated therewith, and a fixing part 123 may have a controller 130 integrated therewith. An antenna 124 may be installed on the fixing part 123 to gain access to the communication network 140. In particular, the jetting nozzle 153 of the smart plug 150 may be coupled to a lower end, side, or upper end of the IP camera 121.

Thus, if the user adjusts the pan tilt unit 122 of the IP camera unit 120 through an app of the smartphone 160, the position of the jetting nozzle 153, as well as the position of the IP camera 121, may freely be adjusted in an upper, lower, left, and right direction.

As shown in Fig. 5, flame sensors 110 may be distributed in multiple positions in a building, and the IP camera unit 120 and the smart plug 150 may be installed in some positions.

Therefore, if a flame sensing signal is transmitted from the flame sensor 110 to the smartphone 160, the user may turn on the IP camera unit 120 via the smartphone 160 and may thus search and retrieve the fire area in real-time.

Figs. 6 to 8 are views schematically illustrating the state of adjustment and jetting of a remote fire extinguishing system 100, 200, or 300 according to various embodiments of the present invention.

The user may search for the fire area through the monitor 161 of the smartphone 160. To that end, an app of the smartphone 160 may have four buttons 162 to adjust the position of the IP camera unit 120. For example, if a left button 162 of the smartphone 160 is pressed, the IP camera 121 and the jetting nozzle 153 may be moved to the left, when a right button 162 is pressed, moved to the right, when an upper button 162 is pressed, moved upwards, and when a lower button 162 is pressed, moved downwards. Further, when a button 163 provided in the center is pressed, the electronic valve 152 of the smart plug 150 is open to allow water or a fire extinguishing liquid to be jetted to the fire area through the jetting nozzle 153. Further, the user may adjust the buttons 162 of the smartphone 160, thereby adjusting the jetting direction of water or fire extinguishing liquid in real-time.

In other words, although the fire area is initially positioned at a top right end of the monitor 161 of the smartphone 160 as shown in Fig. 6, the four buttons 162 may properly be adjusted to allow the fire area to be shown in the center of the monitor 161 of the smartphone 160. Such a state means that the IP camera unit 120 and the jetting nozzle 153 are directed substantially straight to the fire area.

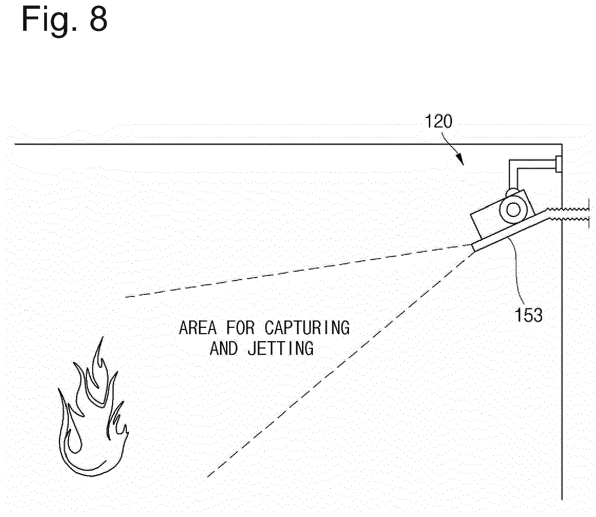

If the jet button 163 provided in the monitor 161 of the smartphone 160 is pressed in this state, water or a fire extinguishing liquid may directly be jetted to the fire area as shown in Fig. 8.

By so doing, the remote fire extinguishing system 100, 200, or 300 according to an embodiment may allow the circumstance and location of the fire scene and information about the fire scene to be provided or known to the smartphone 160 via the flame sensor 110 and the communication network 140, e.g., a wireless network (WCDMA) or wired network (PSTN) when a fire occurs and, if the monitor 161 of the smartphone 160 is then rendered to interoperate via the IP camera unit 120, identify the monitor 161 and then execute the smart plug 150,250, and allow the fire to be put out with water or a fire extinguishing liquid at an early stage even from a remote site via an IP camera app.

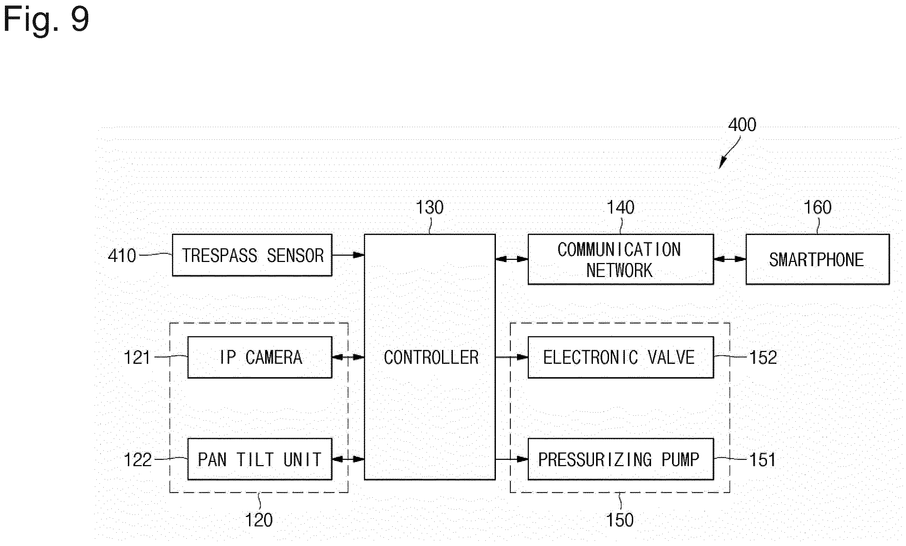

Fig. 9 is a block diagram illustrating a configuration of a remote security system 400 according to various embodiments of the present invention.

Referring to Fig. 9, according to various embodiments of the present invention, a remote security system 400 may include a trespass sensor 410, an IP camera unit 120, a controller 130, a communication network 140, a smart plug 150, and a smart phone 160.

The trespass sensor 410 may be installed in a home, company, factory, or skyscraper to detect trespass and transmit a trespass sensing signal to the controller 130. The controller 130 transmits the trespass sensing signal to the smartphone 160 via the communication network 140. If a door or window is open with the trespass sensor 410 installed substantially on the door or window, such a state may be transmitted to the smartphone 160.

When receiving a capturing request signal from the smartphone 160, the IP camera unit 120 may capture the area where trespass occurs (i.e., the trespasser) and transmit the captured image to the controller 130. The controller 130 transmits the captured image for the trespasser to the smartphone 160 via the communication network 140. Here, the IP camera 121 may be a typical camera capable of capturing on visible light or an infrared camera or thermal imaging camera capable of easily determining any trespasser even at nighttime. Thus, even at a lightless dark nighttime, a trespasser may easily be determined via the infrared camera. Here, the example in which the IP camera is an IP infrared camera may be shared in all the embodiments of the present invention.

The IP camera unit 120 may include an IP camera 121 and a pan tilt unit 122. The IP camera 121 may capture the trespassing area and transmit the captured image to the smartphone 160. The pan tilt unit 122 may move the IP camera 121 up, down, to the left, or to the right by a user control signal from the smartphone 160 to allow the user to observe the trespassing area through the smartphone 160. The IP camera 121 may be mounted substantially on the pan tilt unit 122. Further, the trespass sensor 410 may not only be formed on a door or window but may also be integrally formed with the IP camera 121. In this case, the trespass sensor 410 detects whether there is a human body movement after security is set.

As described above, the controller 130 transmits a trespass signal from the trespass sensor 410 via the communication network 140 to the smartphone 160, transmits a trespass image captured by the IP camera 121 of the IP camera unit 120 through the communication network 140 to the smartphone 160, and receives a user control signal from the smartphone 160 through the communication network 140 to move the pan tilt unit 122 of the IP camera unit 120 to move up, down, to the left, or to the right, thereby allowing the user to more precisely search for the trespass image through the IP camera 121.

The communication network 140 may include a wireless network (WCDMA) or a wired network (PSTN) and enables data communication between the trespass sensor 410, the IP camera unit 120, the smart plug 150, and/or the smartphone 160.

When receiving a user control signal from the smartphone 160 via the communication network 140 and the controller 130, the smart plug 150 may directly jet a fire extinguishing material (e.g., an ink, capsaicin gas, tear gas, or tear gas-containing water) to the trespassing area, i.e., the trespasser.

To that end, the smart plug 150 may include a pressurizing pump 151, an electronic valve 152, and a jetting nozzle 153. The pressurizing pump 151 may pressurize and supply water by a control signal from the smartphone 160. The electronic valve 152 may open (or close) a flow path to allow water to be jetted from the pressurizing pump 151. The jetting nozzle 153 is connected to the electronic valve 152 to allow water to be actually jetted to the trespassing area. Here, the jetting nozzle 153 is mounted on the IP camera 121 to allow water to be jetted to the trespassing area which the IP camera 121 is oriented.

In other words, if the user adjusts the IP camera unit 120 to be positioned to face the trespassing area while viewing the monitor 161 of the smartphone 160 and transmits a water jet control signal, the electronic valve 152 of the smart plug 150 is open to allow the jetting nozzle 153 to directly and in real-time jet water to the area where trespass actually occurs. In other words, if the user adjusts the direction in which the IP camera unit 120 is directed through an app of the smartphone 160, the direction in which the jetting nozzle 153 is directed may also be adjusted, thereby allowing the user to directly jet water to the trespassing scene in an easy manner. Further, the strength of the pressurizing pump 151 may be adjusted through the smartphone 160 so that the distance at which water is jetted may be adjusted. Further, the opening angle of the electronic valve 152 may be adjusted through the smartphone 160, thereby allowing the amount of water jetted to be adjusted. Thus, the user may jet water in a distance and amount optimized for the trespassing area.

The smartphone 160 may include a particular app for various operations described above. In other words, an app programed to enable the above-described operations is installed on the smartphone 160. The app of the smartphone 160 receives a trespass sensing signal from the trespass sensor 410 through the communication network 140 and notifies the user of the trespass via an alarm signal. The alarm signal may be a visual signal or audible signal.

Then, if the user notices the trespass and inputs an operation signal or capturing request signal for the IP camera unit 120, the IP camera unit 120 transmits an image for the trespassing scene via the communication network 140 to the smartphone 160.

Then, the user may search for the trespass image via the monitor 161 of the smartphone 160. As the user adjusts a position changing button 162 of the smartphone 160, the position of the IP camera unit 120 may be varied, thus allowing the position of the IP camera unit 120 and the smart plug 150 with respect to the jetting nozzle 153 to be adjusted. In particular, the user may adjust the position via the smartphone 160 to allow the IP camera unit 120 and the jetting nozzle 153 to precisely face the trespassing area.

If the user presses the jet button 163 provided in the smartphone 160 in the state, water may directly be jetted to the trespassing area through the jetting nozzle 153 of the smart plug 150, thus preventing the trespasser from further invasion or robbery or larceny.

By so doing, the remote security system 400 according to an embodiment of the present invention may allow the circumstance and location of the trespass scene and information about the trespass scene to be provided or known to the smartphone 160 via the trespass sensor 410 and the communication network 140, e.g., a wireless network (WCDMA) or wired network (PSTN) when the trespass occurs and, if the monitor 161 of the smartphone 160 is then rendered to interoperate via the IP camera unit 120, identify the monitor 161 and then execute the smart plug 150, and allow the trespasser to be expelled with water even from a remote site via an IP camera app.

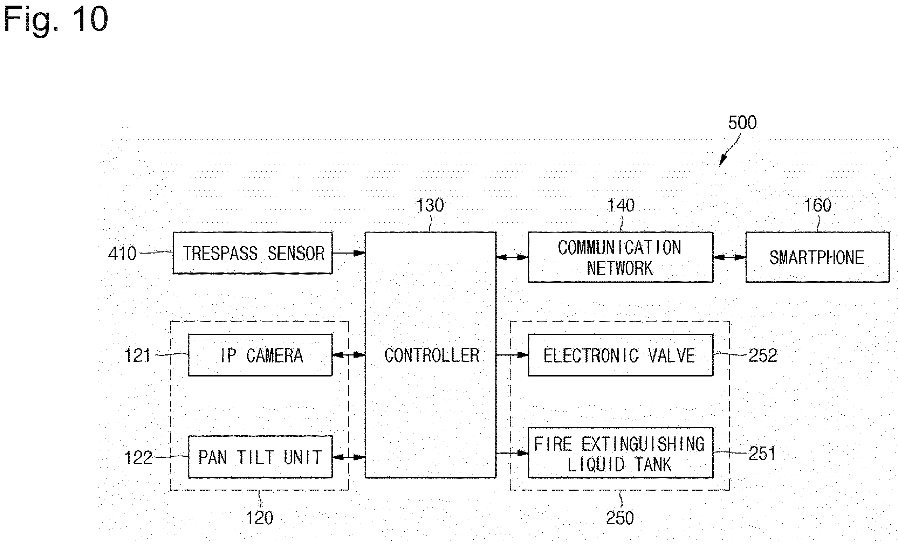

Fig. 10 is a block diagram illustrating a configuration of a remote security system 500 according to various embodiments of the present invention.

The configuration of the remote security system 500 shown in Fig. 10 is similar to the configuration of the remote security system 400 shown in Fig. 9. Thus, the description focuses primarily on the differences.

Referring to Fig. 10, according to an embodiment of the present invention, the remote security system 500 includes a smart plug 250 which differs from the above-described smart plug 150.

When receiving a user control signal from the smartphone 160 via the communication network 140 and the controller 130, the smart plug 250 may directly jet a fire extinguishing material (e.g., fire extinguishing liquid or expellant liquid) to the trespassing area. To that end, the smart plug 250 may include a fire extinguishing liquid tank 251, an electronic valve 252, and a jetting nozzle. The fire extinguishing liquid tank 251 stores a compressed fire extinguishing liquid. The electronic valve 252 may open (or close) the flow path to allow the fire extinguishing liquid from the fire extinguishing liquid tank 251 to be jetted. The jetting nozzle is connected to the electronic valve 252 to allow the fire extinguishing liquid to actually be jetted to the trespassing area. Here, the jetting nozzle is mounted on the IP camera 121 to allow the fire extinguishing liquid to be jetted to the trespassing area which the IP camera 121 is oriented. In other words, if the user allows the IP camera unit 120 to be positioned to face the trespassing area while viewing the monitor 161 of the smartphone 160 and transmits a fire extinguishing liquid jet control signal, the electronic valve 252 of the smart plug 250 is open to allow the jetting nozzle to directly and in real-time jet the fire extinguishing liquid to the area where trespass actually occurs. In other words, if the user adjusts the direction in which the IP camera unit 120 faces through the app of the smartphone 160, the direction in which the jetting nozzle faces may also be adjusted, thus allowing the user to directly jet the fire extinguishing liquid to the trespass scene in an easy manner. Further, the opening angle of the electronic valve 152 may be adjusted through the smartphone 160 to allow the amount of fire extinguishing liquid jetted to be adjusted, so that the user may jet an optimized amount of fire extinguishing liquid to the trespassing area.

By so doing, the remote security system 500 according to an embodiment of the present invention may allow the circumstance and location of the trespass scene and information about the trespass scene to be provided or known to the smartphone 160 via the trespass sensor 410 and the communication network 140, e.g., a wireless network (WCDMA) or wired network (PSTN) when the trespass occurs and, if the monitor 161 of the smartphone 160 is then rendered to interoperate via the IP camera unit 120, identify the monitor 161 and then execute the smart plug 250, and allow the fire extinguishing liquid to be jetted to the trespassing area even from a remote site via an IP camera app.

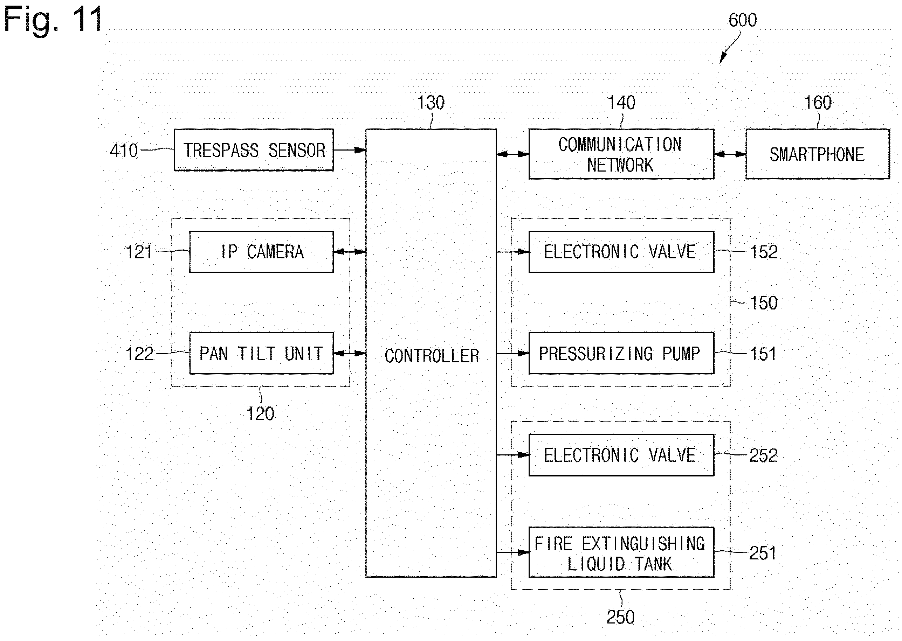

Fig. 11 is a block diagram illustrating a configuration of a remote security system 600 according to various embodiments of the present invention.

The configuration of the remote security system 600 shown in Fig. 11 is similar to the configuration of the remote security systems 400 and 500 shown in Figs. 9 and 10.

In other words, as shown in Fig. 11, according to an embodiment of the present invention, the remote security system 600 may include a smart plug 150 to allow water to be jetted to the trespassing area and a smart plug 250 to allow a fire extinguishing liquid to be jetted to the trespassing area so that the kind of a material to be jetted may be selected depending on the kind of trespasser.

Thus, the user may selectively control the smart plug 150, which may jet water, and the smart plug 250, which may jet a fire extinguishing liquid, depending on the type of trespasser (e.g., ordinary robber or armed robber).

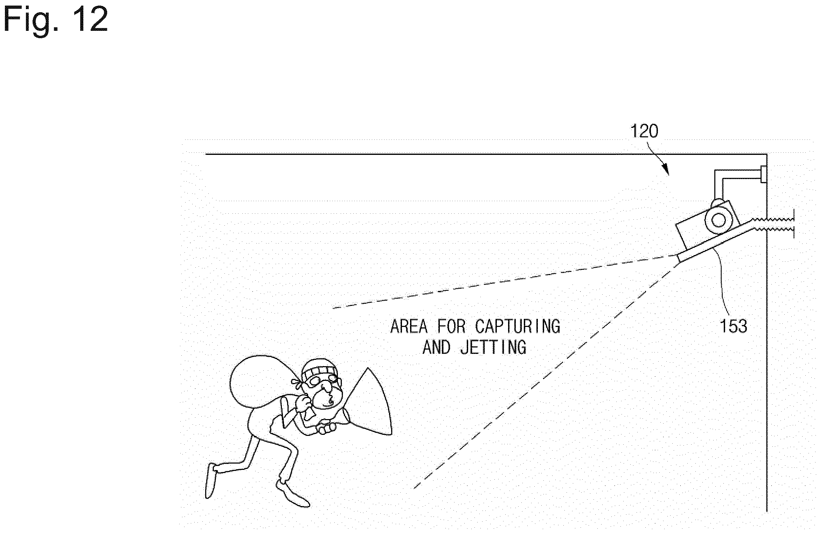

Fig. 12 is a view schematically illustrating the state of adjustment and jetting of a remote security system 400, 500, or 600 according to various embodiments of the present invention.

If a trespassing area is identified through the smartphone 160, the four buttons 162 may properly be adjusted to allow the trespassing area to be shown in the center of the monitor 161 of the smartphone 160. Such a state means that the IP camera unit 120 and the jetting nozzle 153 are directed substantially straight to the trespassing area.

If the jet button 163 provided in the monitor 161 of the smartphone 160 is pressed in this state, water or a fire extinguishing liquid may directly be jetted to the trespassing area.

By so doing, the remote security system 400, 500, or 600 according to an embodiment of the present invention may allow the circumstance and location of the trespass scene and information about the trespass scene to be provided or known to the smartphone 160 via the trespass sensor 410 and the communication network 140, e.g., a wireless network (WCDMA) or wired network (PSTN) when the trespass occurs and, if the monitor 161 of the smartphone 160 is then rendered to interoperate via the IP camera unit 120, identify the monitor 161 and then execute the smart plug 150, and allow water or fire extinguishing liquid to be jetted to the trespassing area even from a remote site via an IP camera app.

While the remote fire extinguishing system and remote security system have been shown and described with reference to exemplary embodiments thereof, it will be apparent to those of ordinary skill in the art that various changes in form and detail may be made thereto without departing from the spirit and scope of the disclosure as defined by the following claims.

## Claims

1. A remote fire extinguishing system, comprising:
a flame sensor detecting a flame when a fire occurs and transmitting a flame sensing signal through a communication network;
a smartphone transmitting a capturing signal for an area where the fire occurs through the communication network when receiving the flame sensing signal through the communication network;
an IP camera unit capturing the fire area when receiving the capturing signal from the smartphone, and transmitting a captured image through the communication network to the smartphone; and
a smart plug jetting a fire extinguishing liquid to the fire area when receiving a user control signal from the smartphone through the communication network.

2. The remote fire extinguishing system of claim 1, wherein the IP camera unit includes an IP camera capturing the fire area; and a pan tilt unit having the IP camera mounted thereon and moving the IP camera in an upper, lower, left, or right direction by the user control signal from the smartphone.

3. The remote fire extinguishing system of claim 2, wherein the smart plug includes a pressurizing pump pressurizing water; and an electronic valve jetting water from the pressurizing pump, wherein a jetting nozzle is connected to the electronic valve, and wherein the jetting nozzle is mounted on the IP camera.

4. The remote fire extinguishing system of claim 2, wherein the smart plug includes a fire extinguishing liquid tank; and an electronic valve jetting a fire extinguishing liquid from the fire extinguishing liquid tank, wherein a jetting nozzle is connected to the electronic valve, and wherein the jetting nozzle is mounted on the IP camera.

5. The remote fire extinguishing system of claim 3 or 4, wherein the IP camera and the jetting nozzle are together moved in an upper, lower, left, or right direction by the user control signal from the smartphone.

6. A remote security system, comprising:
a trespass sensor detecting a trespass when the trespass occurs and transmitting a trespass sensing signal through a communication network;
a smartphone transmitting a capturing signal for an area where the trespass occurs through the communication network when receiving the trespass sensing signal through the communication network;
an IP camera unit capturing the trespassing area when receiving the capturing signal from the smartphone, and transmitting a captured image through the communication network to the smartphone; and
a smart plug jetting a fire extinguishing liquid to the trespassing area when receiving a user control signal from the smartphone through the communication network.

7. The remote security system of claim 6, wherein the IP camera unit includes an IP camera capturing the trespassing area; and a pan tilt unit having the IP camera mounted thereon and moving the IP camera in an upper, lower, left, or right direction by the user control signal from the smartphone.

8. The remote security system of claim 6, wherein the smart plug includes a pressurizing pump pressurizing water; and an electronic valve jetting water from the pressurizing pump, wherein a jetting nozzle is connected to the electronic valve, and wherein the jetting nozzle is mounted on the IP camera.

9. The remote security system of claim 6, wherein the smart plug includes a fire extinguishing liquid tank; and an electronic valve jetting a fire extinguishing liquid from the fire extinguishing liquid tank, wherein a jetting nozzle is connected to the electronic valve, and wherein the jetting nozzle is mounted on the IP camera.

10. The remote security system of claim 8 or 9, wherein the IP camera and the jetting nozzle are together moved in an upper, lower, left, or right direction by the user control signal from the smartphone.
